# EUROPÄISCHE PATENTSCHRIFT

(11) **EP 0 911 920 B1**
(45) Veröffentlichungstag und Bekanntmachung des Hinweises auf die Patenterteilung: **05.02.2003**
(21) Anmeldenummer: 98119732.0
(22) Anmeldetag: 20.10.1998
(51) Int. Cl.: H01S 3/02, H01S 5/02, H01S 3/042

(54) **Verfahren zum Montieren einer einseitig mit einer hochreflektierenden Schicht beschichteten Laserkristallscheibe auf einem Kühlkörper**
Method of mounting a laser crystal wafer with a highly reflective coating on a heatsink
Méthode de montage d'une platine laser cristalline avec une couche de haute réflection sur un dissipateur de chaleur

(30) Priorität: 23.10.1997 DE 19746835
(43) Veröffentlichungstag der Anmeldung: 28.04.1999
(73) Patentinhaber: JENOPTIK Aktiengesellschaft, 07743 Jena (DE)
(72) Erfinder: Hollemann, Günter, 07749 Jena (DE); Koch, Ralf, 10247 Berlin (DE); Voelckel, Hermann, 07768 Kahla (DE); Wendler, Stephan, 07743 Jena (DE); Süss, Katja, 07745 Jena (DE)
(74) Vertreter: Oehmke, Volker, Dipl.-Math.

(56) Entgegenhaltungen:
- EP-A- 0 632 551
- DE-A- 19 536 434
- US-A- 4 480 261
- US-A- 4 947 238

## Beschreibung

1992 wurde gemeinsam vom Institut für Strahlwerkzeuge der Universität Stuttgart und dem Institut für Technische Physik der Deutschen Forschungsanstalt für Luft- und Raumfahrt das innovative Konzept des Scheibenlasers entwickelt [1 - 3]. Dieses ist als Antwort auf die Herausforderung an die Laserentwicklung entstanden, die sich aus der Verfügbarkeit von Hochleistungsdiodenlasern als Pumplichtquellen für Festkörperlaser ergab. Hochleistungsdiodenlaser weisen eine Reihe von vorteilhaften Eigenschaften gegenüber Bogen- bzw. Blitzlampen auf, deren optimale Ausnutzung grundlegende Änderungen in der Anregungs- und Kühlgeometrie des laseraktiven Mediums erfordert. Bei hohen Ausgangsleistungen ist das sich aus Volumenheizung und Oberflächenkühlung ergebende Temperaturfeld im Laserkristall von zentraler Bedeutung, da es sowohl den Wirkungsgrad als auch die erzielbare Strahlqualität wesentlich mitbestimmt. Beim Scheibenlaser wird eine dünne Scheibe aus einem laseraktiven Material (im folgenden als Laserkristallscheibe bezeichnet, obwohl auch andere laseraktive Materialien wie Lasergläser Verwendung finden können) mit einem Hochleistungdiodenlaser longitudinal gepumpt und von der Rückseite über einen Kühlkörper (Wärmesenke) gekühlt.
Bei einer vorteilhaften Ausführungsform eines Scheibenlasers ist die Laserkristallscheibe einseitig mit einem für die Pumpwellenlänge und die Laserwellenlänge hochreflektierenden dielektrischen Spiegelschichtsystem (HR-Schicht) beschichtet, welche einen Resonatorspiegel bildet. Als charakteristische Besonderheit für Scheibenlaser ergibt sich, daß in erster Ordnung kein Temperaturgradient senkrecht zur Strahlrichtung des sich im Resonator ausbreitenden Laserstrahlungsfeldes (Mode) auftritt. Die thermische Linse wird somit weitgehend vermieden. Zur praktischen Umsetzung des Konzepts muß eine starke Absorption des Lasermaterials für die Pumpstrahlung gegeben sein und zusätzlich ein mehrfacher Durchgang der Pumpstrahlung durch die Laserkristallscheibe erfolgen. In [1] werden verschiedene erfolgversprechende Materialien diskutiert. Unter den betrachteten finden sich auch die beiden Materialien, zu denen entsprechende experimentelle Arbeiten in der Fachliteratur berichten: Yb:YAG [z.B. 2] und Nd:YVO₄ [4]. Die verwendeten Materialdicken sind unter 0,5 mm (z.B. 0,2 mm in [4]).

Einen Schwerpunkt bei der erfolgreichen praktischen Realisierung des Scheibenlasers bildet der Wärmeübergang von der Laserkristallscheibe zum Kühlkörper, welcher z.B. mittels eines flüssigen Kühlmediums oder mittels eines Peltier-Kühlers gekühlt werden kann.

Hieraus ergeben sich Anforderungen an die Wärmeleitungseigenschaften der HR-Schicht.
Noch wesentlicher aber ist die Verbindung von der HR-Schicht zum Kühlkörper, der üblicherweise aus Kupfer gefertigt ist.
Zudem sind die mechanischen Eigenschaften der Verbindung bedeutsam, die möglichst spannungsfrei sein soll und diese Eigenschaft auch bei den naturgemäß im allgemeinen unterschiedlichen thermischen Ausdehnungskoeffizienten von Lasermaterial und Kühlkörper aufweisen soll.
Da es sich beim Scheibenlaser um ein generell neues Prinzip handelt, existieren keine aus der Literatur bekannten Lösungsmöglichkeiten zum Montieren einer Laserkristallscheibe auf einen Kühlkörper. Es ist jedoch bekannt geworden, daß bei den Yb:YAG-Scheiben, die für die in [2] beschriebenen Experimente verwendet wurden, mittels einer Zwischenlage aus Indium eine feste Verbindung zwischen der Laserkristallscheibe und dem Kühlkörper aus Kupfer hergestellt wurde. Der bei diesem Verfahren anzuwendende Druck muß oberhalb der Fließgrenze von Indium liegen. Dieser Druck wirkt auf die Laserkristallscheibe und insbesondere auch auf das dielektrische Schichtsystem und wirkt sich auf die Eigenschaften von Kristall und Schichtsystem negativ aus. So tritt bei diesem Verfahren eine relativ hohe Ausschußrate auf. Dies ist insbesondere bei dem sehr spröden Nd:YVO₄ der Fall. Typischerweise gelingt mit dem genannten Verfahren nur bei etwa 20% aller Laserkristallscheiben ein Einpressen ohne deren Zerstörung. Die Homogenität der Verbindungsschicht bleibt auch dann noch eine schwierig zu kontrollierende Größe. Generell bietet dieses Verfahren keine zuverlässig reproduzierbaren Ergebnisse und ist so als Grundlage für eine Serienproduktion ungeeignet.
Für stabförmige aktive Lasermedien sind aus der Literatur [5] das Kleben mittels eines wärmeleitenden silberhaltigen Epoxidharzes und das Löten mittels Indium-Lotes auf vergoldete oder versilberte Kontaktflächen bekannt. In [5] wird dieses Lötverfahren für Nd:YAG-Stäbe und Kühlkörper aus reinem Niob, das einen vergleichbaren thermischen Ausdehnungskoeffizienten aufweist, berichtet (Nd:YAG: 7,8 x 10⁻⁶ K⁻¹, Nb: 7,2 x 10⁻⁶ K⁻¹). Die Wärmeleitfähigkeit von Niob ist aber um etwa den Faktor 8 schlechter als die von Kupfer (Nb: 53,7 W m ⁻¹ K ⁻¹, Cu: 401 W m ⁻¹ K ⁻¹). Da die Wärmeleitfähigkeit des Kühlkörpers beim Scheibenlaser von entscheidender Bedeutung ist, ist eine solch schlechte Wärmeleitung ungeeignet. Zudem ist Niob etwa doppelt so teuer wie Kupfer.
Das beim Scheibenlaser zusätzlich zu berücksichtigende Merkmal, daß sich zwischen der eigentlichen Laserkristallscheibe und dem Kühlkörper zusätzlich die HR-Schicht befindet, ist bei der genannten Lösung nicht berücksichtigt. Eine weitere zu beachtende Besonderheit ist die hohe Zerbrechlichkeit/Empfindlichkeit der Laserkristallscheibe.

Es ist die Aufgabe der Erfindung, ein für die Serienfertigung geeignetes Verfahren zum Montieren einer mit einer HR-Schicht beschichteten Laserkristallscheibe auf einen Kühlkörper zu finden, mit welchem in reproduzierbarer Qualität eine Verbindung maximaler Wärmeleitfähigkeit und minimaler mechanischer Spannungen geschaffen werden kann.
Es ist des weiteren Aufgabe der Erfindung, eine Schichtanordnung zur Verbindung einer Laserkristallscheibe mit einem Kühlkörper zu finden, die mit dem erfindungsgemäßen Verfahren geschaffen wird und eine hoch wärmeleitfähige, spannungsfreie Verbindung darstellt.
Diese Schichtanordnung soll vorteilhafterweise darüber hinaus die HR-Schicht in ihrer Funktion als Resonatorspiegel unterstützen. Diese Aufgaben werden von einem Verfahren gemäß Anspruch 1 mit der erfindungsgemäßen Kombination der aufzutragenden Oberflächenschichten und dem Lot, sowie dem Temperaturregime des Lötprozesses und von einer Schichtanorndung gemäß Anspruch 7 gelöst.

Nachfolgend soll das erfindungsgemäße Montageverfahren mit seinen einzelnen Verfahrensschritten und die damit entstehende erfindungsgemäße Schichtanordnung zwischen einer mit einer HR-Schicht beschichteten Laserkristallscheibe und einem Kühlkörper näher beschrieben werden. Dazu zeigt:

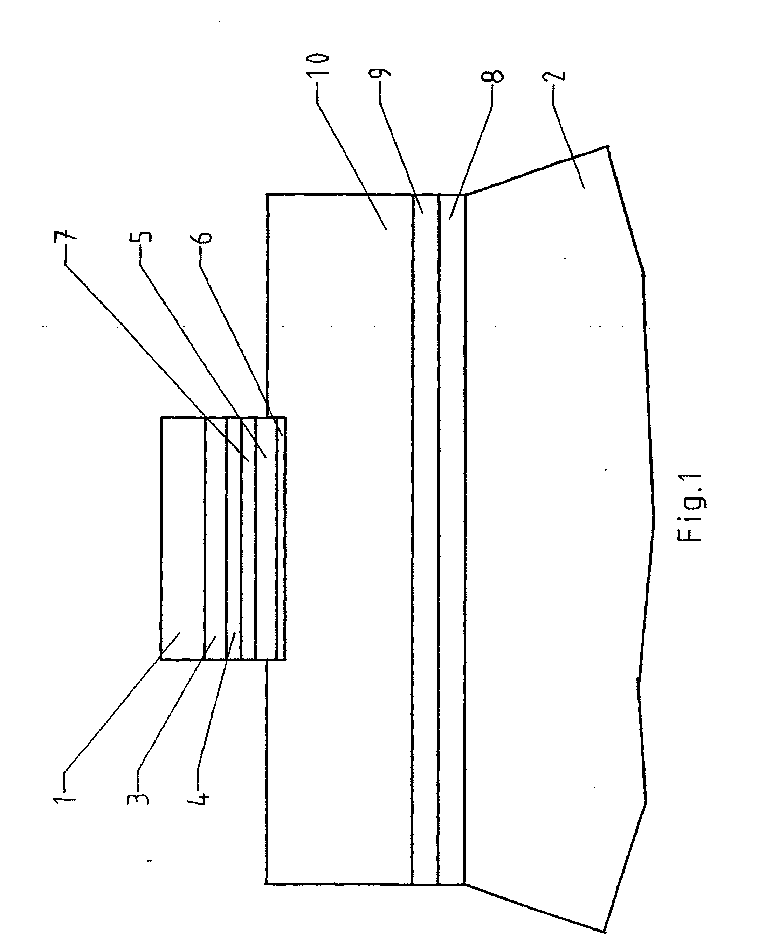

- Fig. 1: die schematische Darstellung der Schichtanordnung zwischen einer Laserkristallscheibe 1 und einem Kühlkörper 2.

In Vorbereitung des eigentlichen Montagevorganges werden die Laserkristallscheibe 1 und der Kühlkörper 2 zeitgleich oder beliebig nacheinander speziell präpariert.

Zur Präparation der Laserkristallscheibe 1 wird in einem ersten Schritt auf die mit einer HR-Schicht 3 beschichteten Oberfläche der Laserkristallscheibe 1 eine erste Gold-, Silber-, oder Kupferschicht 4 mit eine Dicke kleiner 3µm aufgebracht. Diese Schicht ist nicht zwingend erforderlich, sondern dann von Vorteil, wenn die Reflexionseigenschaften der HR-Schicht 3 den Ansprüchen nicht genügen. Durch diese erste Gold-, Silber-, oder Kupferschicht 4 wird auch der eventuell durch die HR-Schicht 3 transmittierende Pump- und Laserstrahlungsanteil in die Laserkristallscheibe 1 zurückreflektiert.
Auf die erste Gold-, Silber-, oder Kupferschicht 4 wird eine Nickel-, Platin- oder Titanschicht 5 mit einer Dicke von etwa 1µm aufgebracht, welche als Diffusionsbarriere für das Lot 10 dient. Die Nickel-, Platin- oder Titanschicht 5 kann auch eine Legierung mit einem überwiegenden Nickel-, Platin- bzw. Titananteil sein.

Um die Hafteigenschaften der Nickel-, Platin- oder Titanschicht 5 durch eine Oxidation an Luft zu verhindern, wird auf die Nickel-, Platin- oder Titanschicht 5 vorteilhafterweise eine abschließende Gold- oder Silberschicht 6, als Haftvermittler zum Lot 10 mit einer Dicke von kleiner 2µm aufgebracht. In Abhängigkeit von den chemischen Eigenschaften der HR-Schicht 3 kann es von Vorteil sein, eine zusätzliche als Haftvermittler dienende Schicht anzuordnen. Diesen Zweck erfüllt eine Chromschicht 7 mit einer Dicke bereits kleiner 0,2 µm, die direkt auf der HR-Schicht 3 bzw. gegebenenfals auf die erste Gold-, Silber-, oder Kupferschicht 4 unterhalb der Nickel-, Platin- oder Titanschicht 5 aufgetragen wird. Eine Haftvermittlung wird auch dann geschaffen, wenn die Nickel-, Platin- oder Titanschicht 5, welche wie bereits erwähnt, auch eine Legierung sein kann, eine Legierung mit Chrom ist.
Die Präparation der Oberfläche des Kühlkörpers 2, welcher üblicherweise aus Kupfer besteht, erfolgt ebenso wie bei der Laserkristallscheibe 1 mit bekannten Beschichtungsverfahren, wie z.B. thermisches Verdampfen (Widerstandsverdampfen), Elektronenstrahlverdampfen, Sputtern oder Auftragen in galvanischen Bädern. Es ist vorteilhaft, wenn die zu beschichtende Oberfläche eine hohe Ebenheit und geringe Rauheit aufweist. Erfindungswesentlich ist auch hier das Auftragen einer Nickel-, Platin- oder Titanschicht 8 mit einer Dicke von etwa 1µm als Diffusionsbarriere. Vorteilhaft ist eine abschließende Gold- oder Silberschicht 9 mit einer Dicke von < 1 µm zur Verhinderung der Oxidation und damit zur Haftvermittlung zum Lot 10.
Das zu verwendende Lot 10 soll durch plastische Verformung die mechanischen Spannungen in der Lotfuge, die sich aus der Differenz der thermischen Ausdehnungskoeffizienten der zu verbindenden Fügepartner ergeben, bestmöglich abbauen. Darüber hinaus darf die Prozeßtemperatur 250° C nicht überschreiten, um eine Beschädigung der Laserkristallscheibe 1 und der HR-Schicht 3 zu vermeiden.
Lote, die dieser Forderung am besten genügen, sind Indium und Indiummischlote (mit einem Indiumanteil zwischen 100% und 10%, der Restbestandteil vorzugsweise Zinn) und zinnreiches Lot (z.B. eine Zinn-Silber-Legierung mit einem Zinnanteil > 30%). Im konkreten Ausführungsbeispiel soll das Lot 10 aus reinem Indium bestehen.
Die Lotschicht wird vorteilhaft durch Vakuumabscheidung unter Nutzung von thermischen Verdampfern mit einer Schichtdicke von 5 µm auf den Kühlkörper 2 aufgebracht. Anschließend wird die Laserkristallscheibe 1 vorteilhafterweise mittels eines Manipuliersystems exakt auf den mit Lot 10 beschichteten Kühlkörper 2 plaziert und mit einer definierten Andruckkraft von maximal 100g/mm² in das Lot 10 gedrückt. Der erforderliche Temperaturzyklus (Zeit/Temperatur) für das Aufschmelzen und Erstarren des Lotes hängt vom verwendeten Lot 10 ab und wird vorteilhafterweise mittels eines regelbaren Heizofens realisiert. Konkret für das Indiumlot erfolgt die Erwärmung über ca. 10 min auf eine Temperatur von ca. 200° C. Der Lötprozeß erfolgt unter Schutzgasatmosphäre.

### Literatur:

[1] U.Brauch et al., Patent DE 43 22 094.0 (1993)
[2] A.Giesen et al., Appl. Phys. B58, 365-372 (1994)
[3] U.Brauch et al., Patent US 5 553 088 (1996)
[4] R.Koch et al., CLEO/QELS'97 Conference on Lasers and Electro-Optics, Paper CFE5
[5] W.Koechner, "Solid-State Laser Engineering", 4.Auflage, Springer Verlag, 1996, S.432

### verwendete Bezugszeichen:

- 1: Laserkristallscheibe
- 2: Kühlkörper
- 3: HR-Schicht
- 4: erste Gold-, Silber-, oder Kupferschicht auf der Laserkristallscheibe
- 5: Nickel-, Platin- oder Titanschicht auf der Laserkristallscheibe
- 6: abschließende Gold- oder Silberschicht auf der Laserkristallscheibe
- 7: Chromschicht
- 8: Nickel-, Platin- oder Titanschicht auf dem Kühlkörper
- 9: abschließende Gold- oder Silberschicht auf dem Kühlkörper
- 10: Lot

## Patentansprüche

1. Verfahren zum Montieren einer einseitig mit einem hochreflektierenden, dielektrischen Spiegelschichtsystem, nämlich einer HR-Schicht (3) beschichteten Laserkristallscheibe (1) auf einen Kühlkörper (2) **dadurch gekennzeichnet, daß**
- auf die HR-Schicht (3) und auf den für die Montage vorgesehenen Oberflächenbereich des Kühlkörpers (2) jeweils eine Nickel-, Platin- oder Titanschicht (5;8), die auch eine Legierung mit überwiegenden Nickel-, Platin-oder Titananteil sein kann, von etwa 1µm aufgetragen wird,
- auf die Nickel-, Platin- oder Titanschicht (8) des Kühlkörpers ein Lot (10) aufgetragen wird, welches ein Indiumlot, ein Indiummischlot oder ein Zinnmischlot (mit einem Zinnanteil von > 30%) mit einer Dicke von maximal 50 µm ist,
- das Lot (10) bei einer Prozeßtemperatur von maximal 250 °C verflüssigt wird und
- die Laserkristallscheibe (1) auf dem Kühlkörper (2) positioniert und mit einer Andruckkraft von maximal 100g/mm² in das Lot (10) gedrückt wird.

2. Verfahren nach Anspruch 1 **dadurch gekennzeichnet,**
**daß** auf die HR-Schicht (3) vor dem Auftragen der Nickel-, Platin- oder Titanschicht (5) auf die Laserkristallscheibe (1) eine erste Gold-, Silber-, oder Kupferschicht (4) mit einer Dicke von kleiner als 3 µm aufgetragen wird.

3. Verfahren nach Anspruch 1 oder 2, **dadurch gekennzeichnet,**
**daß** vor dem Auftragen der Nickel-, Platin- oder Titanschicht (5) auf die Laserkristallscheibe (1) eine Chromschicht (7) mit einer Dicke von kleiner als 0,2 µm aufgetragen wird.

4. Verfahren nach Anspruch 1 oder 2, **dadurch gekennzeichnet,**
**daß** die Nickel-, Platin- oder Titanschicht (5) auf der Laserkristallscheibe (1) eine_Legierung mit Chrom ist.

5. Verfahren nach einem der Ansprüche 1 bis 4, **dadurch gekennzeichnet, daß** auf die Nickel-, Platin- oder Titanschichten (5;8) jeweils eine abschließende Gold- oder Silberschicht (6;9) aufgetragen wird.

6. Verfahren nach einem der Ansprüche 1 bis 5, **dadurch gekennzeichnet, daß** es unter einer Schutzgasatmosphäre stattfindet.

7. Schichtanordnung zwischen einer mit einer HR-Schicht (3) beschichteten Laserkristallscheibe (1) und einem Kühlkörper (2), gemäß dem Verfahren nach Anspruch 1 hergestellt, **dadurch gekennzeichnet, daß** sie folgende Schichten aufweist:
- eine sich auf der Laserkristallscheibe befindende Nickel-, Platin- oder Titanschicht (5) mit einer Dicke von etwa 1µm als Diffusionsbarriere,
- ein Lot (10) , welches ein Indiumlot, ein Indiummischlot oder ein Zinnmischlot mit einem Zinnanteil von> 30% mit einer Dicke von maximal 50 µm ist und eine sich auf dem Kühlkörper (2) befindende Nickel-, Platin- oder Titanschicht mit einer Dicke von etwa 1µm als Diffusionsbarierre, wobei die Nickel-, Platin- oder Titanschichten (5;8) auch Legierungen mit überwiegenden Nickel-, Platin- oder Titananteile sein können.

8. Schichtanordnung nach Anspruch 7, **dadurch gekennzeichnet, daß** sich zusätzlich zwischen der HR-Schicht (3) und der Nickel-, Platin- oder Titanschicht (5) auf der Laserkristallscheibe (1) eine erste Gold-, Silber-, oder Kupferschicht (4) mit einer Dicke von kleiner als 3 µm befindet, welche die HR-Schicht (3) in ihrer Funktion unterstützt.

9. Schichtanordnung nach Anspruch 7 oder 8, **dadurch gekennzeichnet, daß** sich zusätzlich zwischen der HR-Schicht (3) und der Nickel-, Platin- oder Titanschicht (5) auf der Laserkristallscheibe (1) bzw. zwischen der ersten Gold-, Silber-, oder Kupferschicht (4) und der Nickel-, Platin- oder Titanschicht (5) auf der Laserkristallscheibe (1) eine Chromschicht (7) mit einer Dicke von kleiner als 0,2 µm befindet, die als Haftvermittler dient.

10. Schichtanordnung nach einem der Ansprüche 7 bis 9, **dadurch gekennzeichnet,**
**daß** die Nickel-, Platin- oder Titanschicht (5) auf der Laserkristallscheibe (1) eine_Legierung mit Chrom ist.

11. Schichtanordnung nach einem der Ansprüche 7 bis 10, **dadurch gekennzeichnet,**
**daß** auf den Nickel-, Platin- oder Titanschichten (5;8) jeweils eine abschließende Gold- oder Silberschicht (6;9) angeordnet ist, welche eine Haftung zum Lot (10) vermittelt.

## Claims

1. A method of mounting a laser crystal disc (1), which is coated on one side with a highly reflective dielectric reflective layer system, namely an HR layer (3), on a cooling body (2), **characterised in that**:
a layer (5; 8) of nickel, platinum or titanium which can also be an alloy with a predominant content of nickel, platinum or titanium, of about 1µm is applied to the HR layer (3) and to the surface region of the cooling body (2) provided for the mounting,
a solder (10), which is an indium solder, a mixed indium solder or a tin mixed solder (with a tin content of > 30%) with a thickness of at most 50µm is applied to the layer (8) of nickel, platinum or titanium of the cooling body,
the solder (10) is liquefied at a process temperature of at most 250°C; and
the laser crystal disc (1) is positioned on the cooling body (2) and pressed with a pressure of at most 100g/mm² into the solder (10).

2. A method as claimed in claim 1, **characterised in that** a first layer (4) of gold, silver or copper with a thickness of less than 3µm is applied to laser crystal disc (1), the HR layer (3) before the application to the laser crystal disc (1) of the layer (5) of nickel, platinum or titanium.

3. A method as claimed in claim 1 or 2, **characterised in that** a chrome layer (7) with a thickness of less than 0.2µm is applied to the laser crystal disc (1) before the application of the layer (5) of nickel, platinum or titanium.

4. A method as claimed in claim 1 or 2, **characterised in that** the layer (5) of nickel, platinum or titanium on the laser crystal disc (1) is an alloy including chromium.

5. A method as claimed in one of claims 1-4, **characterised in that** a sealing layer (6; 9) of gold or silver is applied to each of the layers (5; 8) of nickel, platinum or titanium.

6. A method as claimed in one of claims 1-5, **characterised in that** it takes place under a protective gas atmosphere.

7. Layer arrangement produced between the laser crystal disc (1) coated with an HR layer (3) and a cooling body (2) by the method as claimed in claim 1, **characterised in that** it has the following layers:
a layer (5) of nickel, platinum or titanium with a thickness of about 1µm situated on the laser crystal disc and constituting a diffusion barrier;
a solder (10), which is an indium solder, a mixed indium solder or a mixed tin solder with a tin content of > 30% with a thickness of at most 50µm and a layer of nickel, platinum or titanium situated on the cooling body (2) with a thickness of about 1µm constituting a diffusion barrier, whereby the layers (5; 8) of nickel, platinum or titanium can also be alloys with a predominant content of nickel, platinum or titanium.

8. Layer arrangement as claimed in claim 7, **characterised in that** additionally situated on the laser crystal disc (1) between the HR layer (3) and the layer (5) of nickel, platinum or titanium there is a first layer (4) of gold, silver or copper with a thickness of less than 3µm, which supports the function of the HR layer (3).

9. Layer arrangement as claimed in claim 7 or 8, **characterised in that** additionally situated on the laser crystal disc (1) between the HR layer (3) and the layer (5) of nickel, platinum or titanium or between the first layer (4) of gold, silver and copper and the layer (5) of nickel, platinum or titanium there is a chromium layer (7) with a thickness of less than 0.2µm, which acts as an adhesion promoter.

10. Layer arrangement as claimed in one of claims 7-9, **characterised in that** the layer (5) of nickel, platinum or titanium on the laser crystal disc (1) is an alloy including chromium.

11. Layer arrangement as claimed in one of claims 7-10, **characterised in that** arranged on each of the layers (5; 8) of nickel, platinum or titanium there is a sealing layer (6; 9) of gold or silver which promotes adhesion with the solder (10).

## Revendications

1. Procédé pour monter un disque de cristal de laser (1) revêtu sur une face d'un système à couches réfléchissantes hautement réfléchissant et diélectrique, à savoir d'une couche HR (3), sur un corps de refroidissement, **caractérisé en ce que**
- on applique sur la couche HR (3) et sur la zone superficielle du corps de refroidissement (2) prévue pour le montage, une couche de nickel, une couche de platine ou une couche de titane (5 ; 8) qui peut être aussi un alliage avec une proportion dominante de nickel, de platine ou de titane, d'environ 1 µm,
- sur la couche de nickel, de platine ou de titane (8) du corps de refroidissement, on applique une matière de brasage (10), qui est une matière de brasage d'indium, une matière de brasage mixte d'indium ou un brasage mixte d'étain (avec une proportion d'étain supérieure à 30 %) d'une épaisseur de 50 µm au maximum,
- la matière de brasage (10) est liquéfiée à une température du processus de 250 °C au maximum, et
- le disque du cristal de laser (1) est positionné sur le corps de refroidissement (2) et est pressé dans la matière de brasage (10) avec une force de pression de 100 g x mm² au maximum.

2. Procédé selon la revendication 1, **caractérisé en ce que** sur la couche HR (3) on applique, avant l'application de la couche de nickel, de platine ou de titane (5), sur le disque du cristal de laser (1), une première couche d'or, d'argent ou de cuivre (4) d'une épaisseur inférieure à 3 µm.

3. Procédé selon la revendication 1 ou 2, **caractérisé en ce qu'**on applique, avant l'application de la couche de nickel, de platine ou de titane (5), sur le disque du cristal de laser (1), une couche de chrome (7) d'une épaisseur inférieure à 0,2 µm.

4. Procédé selon la revendication 1 ou 2, **caractérisé en ce que** la couche de nickel, de platine ou de titane (5) sur le disque du cristal de laser (1) est un alliage contenant du chrome.

5. Procédé selon l'une des revendications 1 à 4, **caractérisé en ce qu'**on applique sur chacune des couches de nickel, de platine ou de titane (5 ; 8) une couche terminale d'or ou d'argent (6 ; 9).

6. Procédé selon l'une des revendications 1 à 5, **caractérisé en ce qu'**il a lieu dans une atmosphère de gaz de protection.

7. Agencement de couches entre un disque de cristal de laser (1) revêtu d'une couche HR (3) et un corps de refroidissement (2), réalisé selon le procédé de la revendication 1, **caractérisé en ce qu'**il comporte les couches suivantes :
- une couche de nickel, de platine ou de titane (5), d'une épaisseur d'environ 1 µm, servant de barrière de diffusion,
- une matière de brasage (10) qui est une matière de brasage d'indium, un brasage mixte d'indium ou une matière de brasage mixte d'étain avec une proportion d'étain supérieure à 30 %, d'une épaisseur de 50 µm au maximum, et une couche de nickel, de platine ou de titane, se trouvant sur le corps de refroidissement (2), d'une épaisseur d'environ 1 µm servant de barrière de diffusion, les couches de nickel, de platine ou de titane (5; 8) pouvant aussi être des alliages avec des proportions dominantes de nickel, de platine ou de titane.

8. Agencement de couches selon la revendication 7, **caractérisé en ce qu'**entre la couche HR (3) et la couche de nickel, de platine ou de titane (5) se trouve, sur le disque de cristal de laser (1), une première couche d'or, d'argent ou de cuivre (4) d'une épaisseur inférieure à 3 µm, qui soutient la couche HR (3) dans sa fonction.

9. Agencement de couches selon la revendication 7 ou 8, **caractérisé en ce qu'**entre la couche HR (3) et la couche de nickel, de platine, de titane (5) se trouve en outre sur le disque de cristal de laser (1), ou entre la première couche d'or, d'argent ou de cuivre (4) et la couche de nickel, de platine ou de titane (5), sur le disque de cristal de laser (1), une couche de chrome (7) d'une épaisseur inférieure à 0,2 µm qui sert d'agent adhésif.

10. Agencement de couches selon l'une des revendications 7 à 9, **caractérisé en ce que** la couche de nickel, de platine ou de titane (5) sur le disque de cristal de laser (1) est un alliage contenant du chrome.

11. Agencement de couches selon l'une des revendications 7 à 10, **caractérisé en ce que** sur chacune des couches de nickel, de platine ou de titane (5 ; 8) est disposée une couche terminale d'or ou d'argent (6 ; 9) qui confère une adhérence avec la matière de brasage (10).
